# EUROPÄISCHE PATENTANMELDUNG

(11) **EP 2 859 827 A1**
(43) Veröffentlichungstag der Anmeldung: **15.04.2015**
(21) Anmeldenummer: 14186860.4
(22) Anmeldetag: 29.09.2014
(51) Int. Cl.: A47J 43/10

(54) **Einteiliger Schneebesen**

(30) Priorität: 10.10.2013 DE 102013220410
(71) Anmelder: Fackelmann GmbH + Co KG, 91217 Hersbruck (DE)
(72) Erfinder: Ellerstorfer, Thomas, 93413 Cham (DE)
(74) Vertreter: Rau, Schneck & Hübner Patentanwälte Rechtsanwälte PartGmbB

(57) **Zusammenfassung**

Die Erfindung betrifft ein Rührwerkzeug, insbesondere Schneebesen, für Lebensmittel, mit einem Griff-Teil (3) zum Greifen des Rührwerkzeugs (1), und mit einem mit dem Griff-Teil (3) in Verbindung stehenden Rühr-Teil (4). Das Rühr-Teil (4) umfasst mindestens zwei Bügel-Elemente (12) zum Einwirken auf das umzurührende Lebensmittel, welche sich jeweils von dem Griff-Teil (3) wegerstrecken. Dabei ist zumindest das Rühr-Teil (4) aus einem Kunststoffmaterial gebildet.

## Beschreibung

Die Erfindung betrifft ein Rührwerkzeug, insbesondere einen Schneebesen, für Lebensmittel. Ferner richtet sich die Erfindung auf eine Gussform, insbesondere Spritzgussform, und auf ein Verfahren zur Herstellung des Rührwerkzeuges.

Rührwerkzeuge für Lebensmittel sind hinreichend bekannt. Diese werden in der Form von Schneebesen beispielsweise dazu verwendet, flüssige oder halbflüssige Lebensmittel schaumig aufzuschlagen oder zu vermengen. Ein Rührwerkzeug besteht in der Regel aus einer Vielzahl von Rührelementen, die radial angeordnet in einen Handgriff münden. Die bekannten Rührwerkzeuge, insbesondere Schneebesen, für Lebensmittel sind in der Regel mehrteilig aufgebaut. Die Herstellung bekannter Rührwerkzeuge ist aufwändig. Ferner weisen die Handhabbarkeit bekannter Rührwerkzeuge, insbesondere bekannter Schneebesen, und die mit den Rührwerkzeugen erreichbaren Rührergebnisse Verbessenmgspotential auf.

Der Erfindung liegt die Aufgabe zugrunde, ein Rührwerkzeug, insbesondere einen Schneebesen bereitzustellen, der besonders gut handhabbar ist und optimale Rührergebnisse liefert.

Diese Aufgabe wird erfindungsgemäß durch die in dem unabhängigen Anspruch 1 angegebenen Merkmale gelöst. Dadurch, dass das Rührwerkzeug ein Griff-Teil zum Greifen des Rührwerkzeugs und ein mit dem Griff-Teil in Verbindung stehendes Rühr-Teil mit mindestens zwei Bügel-Elementen zum Einwirken auf das umzurührende Lebensmittel, welche sich jeweils von dem Griff-Teil wegerstrecken, aufweist und zumindest das Rühr-Teil aus einem Kunststoffmaterial gebildet ist, wird ein besonders gut handzuhabendes Rührwerkzeug geschaffen. Eine Ausbildung zumindest des RührTeils aus einem Kunststoffmaterial gewährleistet eine Spülmaschineneignung, besonders gute Anti-Haft-Eigenschaften sowie eine besonders gute Hitzebeständigkeit des Rühr-Teils. Durch Ausbildung zumindest des Rühr-Teils aus einem Kunststoffmaterial sind folglich eine Spülmaschinentauglichkeit, Anti-Haft-Eigenschaften und die Hitzebeständigkeit des Rührwerkzeugs verbesserbar, ohne dass Beschichtungsmaterialien eingesetzt werden müssen. Als Kunststoffmaterial für zumindest das Rühr-Teil ist beispielsweise Silikon verwendbar. Mit dem Rührwerkzeug sind auch besonders gute Rührergebnisse, also beispielsweise ein Aufschlagen oder Vermengen von Lebensmitteln, erreichbar. Das Griff-Teil erstreckt sich vorzugweise entlang einer Werkzeuglängsachse. Die Bügel-Elemente des Rühr-Teils erstrecken sich dabei jeweils entlang der Werkzeuglängsachse von dem Griff-Teil weg. Durch die Verwendung eines Kunststoffmaterials ist auch eine besonders flexible Gestaltung des Rühr-Teils möglich. So sind mit Hilfe geeigneter Kunststoff-Gießverfahren nahezu beliebige Bügel-Element-Konturen des Rühr-Teils verwirklichbar.

Weitere vorteilhafte Ausgestaltungen der Erfindung sind in den Unteransprüchen angegeben.

Ein Rührwerkzeug nach Anspruch 2 ermöglicht durch die einstückige Gestaltung des Griff-Teils und des Rühr-Teils aus einem Kunststoffmaterial ein Rührwerkzeug, welches als Ganzes eine Spülmaschineneignung und eine besonders gute Hitzebeständigkeit aufweist. Ferner ist ein komplett aus einem Kunststoffmaterial ausgebildetes Rührwerkzeug kostengünstig und flexibel herstellbar.

Ein Rührwerkzeug nach Anspruch 3 ermöglicht besonders gute Rührergebnisse. Vorteilhafterweise umfasst das Rühr-Teil fünf Bügel-Elemente, alternativ können auch drei, sieben oder elf Bügel-Elemente vorgesehen sein.

Ein Rührwerkzeug nach Anspruch 4 ermöglicht ein optimales Einwirken des Rührwerkzeugs auf das umzurührende Lebensmittel. Es ist von Vorteil, wenn das Rühr-Teil fünf Bügel-Elemente umfasst, die in Bezug zur Werkzeuglängsachse einen Winkelabstand von 72° zueinander aufweisen.

Ein Rührwerkzeug nach Anspruch 5 verbessert die mit dem Rührwerkzeug erreichbaren Rührergebnisse.

Ein Rührwerkzeug nach Anspruch 6 gewährleistet eine stabile Gestaltung des Rühr-Teils. Die Verbindungsstelle ist vorzugsweise als eine Art Verbindungsplatte bzw. Verbindungsscheibe ausgebildet, an der alle Bügel-Elemente zueinander laufen.

Ein Rührwerkzeug nach Anspruch 7 gewährleistet eine stabile und gegen unerwünschte Verformung gesicherte Gestaltung der einzelnen Bügel-Elemente. Es ist von Vorteil, wenn die Bügel-Elemente jeweils neben dem Abschnitt mit konvexer Krümmung in Bezug zur Werkzeuglängsachse auch einen zweiten Abschnitt mit konkaver Krümmung in Bezug zur Werkzeuglängsachse aufweisen. Durch eine derartige Gestaltung ist die Widerstandsfähigkeit der Bügel-Elemente gegen äußere Verformung weiter verbesserbar.

Ein Rührwerkzeug nach Anspruch 8 verbessert weiter die Widerstandsfähigkeit der Bügel-Elemente des Rühr-Teils gegen Verformung, beispielsweise beim Zusammenwirken mit zähen bzw. dickflüssigen Lebensmitteln.

Ein Rührwerkzeug nach Anspruch 9 ermöglicht eine hohe Stabilität der einzelnen Bügel-Elemente auch in von dem Griff-Teil beabstandeten Endbereichen. Es ist von Vorteil, wenn die Bügel-Elemente beabstandet von dem Griff-Teil einen größeren Querschnitt aufweisen als benachbart zum Griff-Teil.

Ein Rührwerkzeug nach Anspruch 10 ist besonders kostengünstig und in großen Stückzahlen industriell herstellbar.

Eine weitere Aufgabe der Erfindung ist es, eine Gussform, insbesondere Spritzgussform, bereitzustellen, mit der eine Herstellung eines erfindungsgemäßen Rührwerkzeuges auf einfache Art und Weise kostengünstig möglich ist. Diese Aufgabe wird durch eine Gussform, insbesondere Spritzgussform, gemäß Anspruch 11 gelöst. Dadurch, dass die Gussform ein erstes Form-Teil mit ersten Bügel-Element-Formgebungs-Mitteln und ein zweites Form-Teil mit zweiten Bügel-Element-Formgebungs-Mitteln umfasst, wobei die ersten und zweiten Bügel-Element-Formgebungs-Mittel zusammen in einem zusammengesetzten Zustand der Form-Teile Bügel-Teil-Hohlräume zum Bilden der Bügel-Element begrenzen, wird eine besonders kostengünstige und einfache Herstellung des erfindungsgemäßen Rührwerkzeuges ermöglicht. Es ist von Vorteil, wenn mindestens eines der ersten Bügel-Element-Formgebungs-Mittel als Erhebung ausgehend von einer Formgebungs-Mittel-Achse ausgeht und mindestens eines der zweiten Bügel-Element-Formgebungs-Mittel als Vertiefung im zweiten Form-Teil ausgebildet ist, wobei die mindestens eine Erhebung in dem zusammengesetzten Zustand der Form-Teile in die mindestens eine Vertiefung eingreift und einen der Bügel-Teil-Hohlräume bildet.

Eine Gussform nach den Ansprüchen 12 und 13 ermöglicht eine einstückige Herstellung des Griff-Teils und des Rühr-Teils aus einem Kunststoffmaterial mittels einer einzigen Gussform.

Eine weitere Aufgabe besteht darin, ein Verfahren zu schaffen, dass eine flexible, kostengünstige und einfache Herstellung eines erfindungsgemäßen Rührwerkzeuges ermöglicht.

Diese Aufgabe ist durch ein Verfahren gemäß Anspruch 14 gelöst. Dadurch, dass ein Bereitstellen einer erfindungsgemäßen Gussform, ein Überführen der Form-Teile in den zusammengesetzten Zustand, ein Einbringen eines Kunststoffmaterials in die Gussform zur Erzeugung des erfindungsgemäßen Rührwerkzeugs und ein Entformen des erzeugten Rührwerkzeugs aus der Gussform vorgesehen ist, wird auf eine besonders einfache und kostengünstige Art und Weise ein Rührwerkzeug geschaffen, dass die oben erläuterten Vorteile aufweist.

Weitere Merkmale, Vorteile und Einzelheiten der Erfindung ergeben sich aus der nachfolgenden Beschreibung von Ausführungsbeispielen. Es zeigen:
- Fig. 1: eine perspektivische Ansicht eines als Schneebesen ausgebildeten erfindungsgemäßen Rührwerkzeuges;
- Fig. 2: eine Frontansicht des Rührwerkzeuges gemäß Fig. 1;
- Fig. 3: eine in Bezug zu Fig. 2 um 180° gedrehte Ansicht des Rührwerkzeuges;
- Fig. 4: eine Ansicht des Rührwerkzeuges gemäß den Fig. 1 bis Fig. 3 aus Blickrichtung IV in Fig. 3;
- Fig. 5: eine isolierte Darstellung eines Bügel-Elements des Rührwerkzeugs gemäß den Fig. 1 bis Fig. 4;
- Fig. 6: eine um 90° nach rechts gedrehte Ansicht des Bügel-Elements gemäß Fig. 5;
- Fig. 7: eine um 90° nach unten gedrehte Ansicht des Bügel-Elements gemäß Fig. 5;
- Fig. 8: eine schematische Ansicht einer ersten Ausführungsvariante einer erfindungsgemäßen Gussform zur Herstellung des Rührwerkzeugs gemäß den Fig. 1 bis Fig. 7, wobei ein Schnitt durch die Gussform im Bereich des Griff-Teils des herzustellenden Rührwerkzeugs gezeigt ist;
- Fig. 9: eine zweite schematische Ansicht der Gussform gemäß der Fig. 8, wobei ein Schnitt durch die Gussform im Bereich eines Übergangs-Abschnitts des Griff-Teils des herzustellenden Rührwerkzeuges gezeigt ist;
- Fig. 10: eine dritte schematische Ansicht der Gussform gemäß den Fig. 8 und Fig. 9, wobei ein Schnitt durch die Gussform im Bereich der Bügel-Elemente des herzustellenden Rührwerkzeuges gezeigt ist;
- Fig. 11: eine perspektivische Ansicht einer zweiten Ausführungsvariante einer erfindungsgemäßen Gussform zur Herstellung des Rührwerkzeugs gemäß den Fig. 1 bis Fig. 7, umfassend ein erstes Form-Teil und ein zweites Form-Teil; und
- Fig. 12: eine isolierte Ansicht des ersten Form-Teils gemäß Fig. 11 mit einem erzeugten Rührwerkzeug gemäß den Fig. 1 bis Fig. 7.

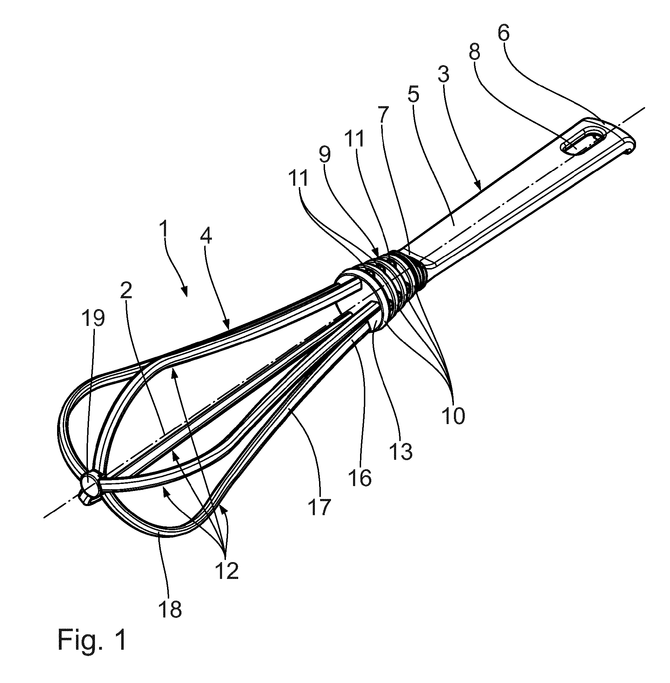

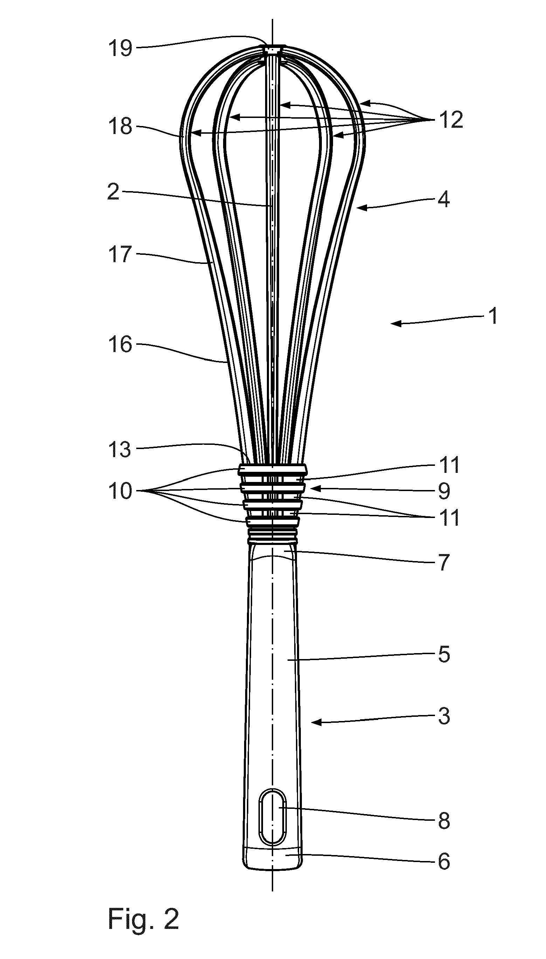

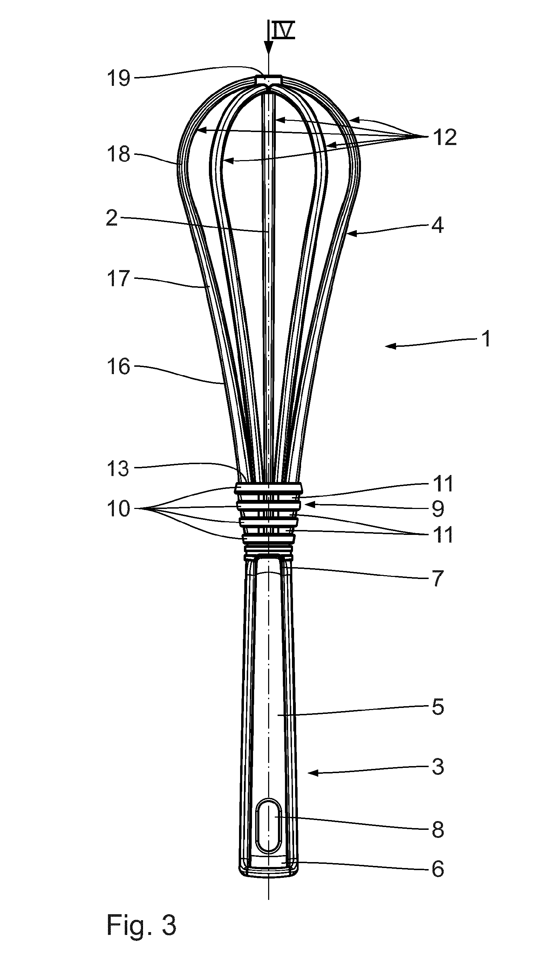

Nachfolgend ist unter Bezugnahme auf Fig. 1 bis Fig. 7 ein Ausführungsbeispiel des erfindungsgemäßen Rührwerkzeuges beschrieben. Bei dem Rührwerkzeug handelt es sich um einen Schneebesen 1, mit dem Lebensmittel, beispielsweise flüssige oder halbflüssige Zutaten und Gemische verrührbar, vermengbar bzw. homogenisierbar sind

Der Schneebesen 1 umfasst ein sich entlang einer Werkzeuglängsachse 2 erstreckendes Griff-Teil 3 zum Greifen des Schneebesens 1 und ein mit dem Griff-Teil 3 in Verbindung stehendes Rühr-Teil 4. In der gezeigten Ausfühningsvariante des Schneebesens 1 sind das Griff-Teil 3 und das Rühr-Teil 4 einstückig aus einem Kunststoffmaterial gebildet. Es ist grundsätzlich alternativ auch vorstellbar, lediglich das Rühr-Teil oder lediglich das Griff-Teil aus dem Kunststoffmaterial auszubilden.

Das Griff-Teil 3 umfasst einen Grundkörper 5, welcher durch einen Benutzer greifbar ist. Der Grundkörper 5 des Griff-Teils 3 ist aus einem Vollmaterial gebildet. Der Grundkörper 5 weist in Querrichtung zur Werkzeuglängsachse 2 eine deutlich geringere Abmessung auf als entlang der Werkzeuglängsachse 2. Der Grundkörper 5 umfasst einen ersten stirnseitigen Endbereich 6 und entlang der Werkzeuglängsachse 2 einen vom ersten stirnseitigen Endbereich 6 beabstandeten zweiten stirnseitigen Endbereich 7. In dem ersten stirnseitigen Endbereich 6 ist eine Aufhänge-Durchbrechung 8 vorgesehen, welche zum Zwecke einer Aufbewahrung bzw. Verstauung des Schneebesens 1 bei einem Nichtgebrauch zur Aufhängung des Schneebesens 1 an einem Küchenhaken oder dergleichen dient. Teil des zweiten stirnseitigen Endbereichs 7 ist ein sich entlang der Werkzeuglängsachse 2 erstreckender Übergangs-Abschnitt 9, über welchen der zweite stirnseitige Endbereich 7 des Griff-Teils 3 in das Rühr-Teil 4 übergeht. Der Übergangs-Abschnitt 9 ist in der gezeigten Ausführungsvariante durch vier beabstandet zueinander angeordnete Übergangs-Rippen 10 gebildet, welche jeweils entlang der Werkzeuglängsachse 2 durch Steg-Abschnitte 11 miteinander verbunden sind.

Entlang der Werkzeuglängsachse 2 schließt sich an den Übergangs-Abschnitt 9 des Griff-Teils 3 das Rühr-Teil 4 an. In der gezeigten Ausführungsvariante des Schneebesens 1 umfasst das Rühr-Teil 4 insgesamt fünf Bügel-Elemente 12 zum Einwirken auf das umzurührende Lebensmittel. Die Bügel-Elemente 12 erstrecken sich entlang der Werkzeuglängsachse 2 von einer Stirnfläche 13 des Griff-Teils 3 weg. Die Stirnfläche 13 verläuft quer zur Werkzeuglängsachse 2 im Übergangs-Abschnitt 9 und ist durch eine der Übergangs-Rippen 10 gebildet.

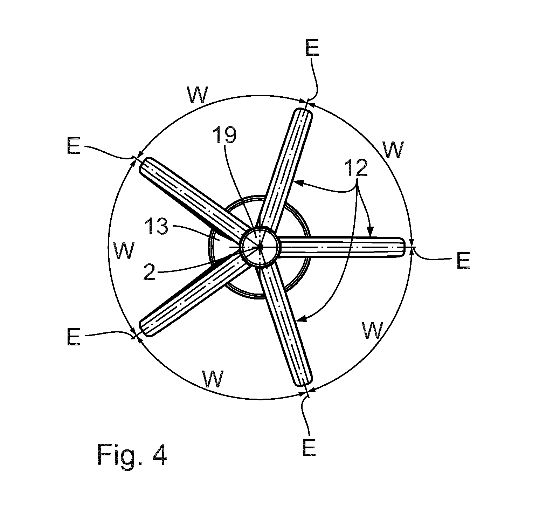

Wie insbesondere Fig. 4 zu entnehmen, sind die Bügel-Elemente 12 um die Werkzeuglängsachse 2 äquidistant beabstandet zueinander angeordnet. Ein Abstandswinkel W der Bügel-Elemente 12 zueinander relativ zur Werkzeuglängsachse 2 beträgt dabei jeweils 72°.

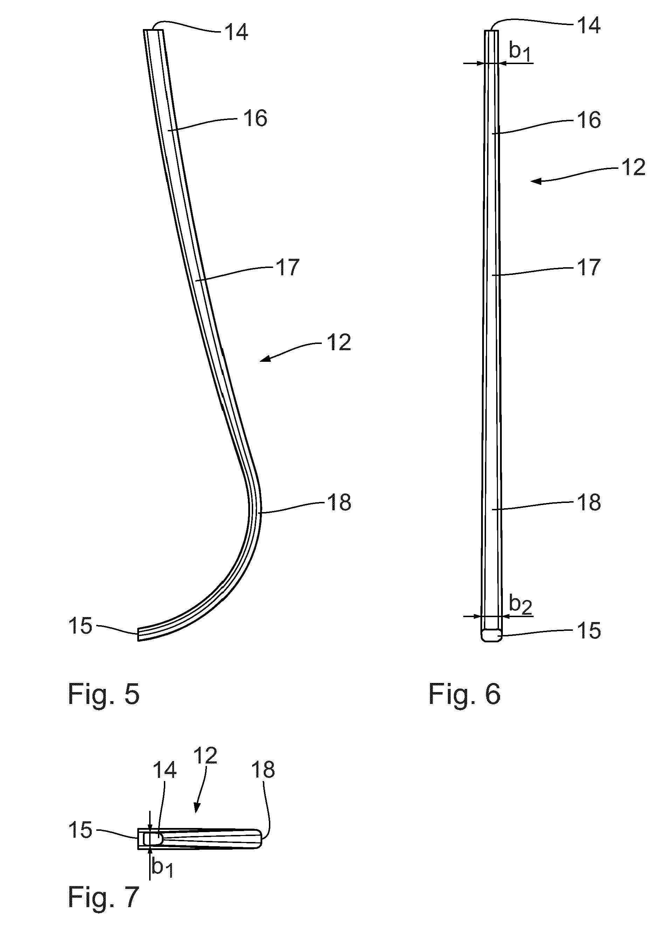

Eines der Bügel-Elemente 12 ist in den Fig. 5, Fig. 6 und Fig. 7 exemplarisch in isolierter Ansicht gezeigt. Die Gestaltung aller fünf Bügel-Elemente 12 ist identisch. Daher wird exemplarisch anhand der Fig. 5, Fig. 6 und Fig. 7 nachfolgend lediglich ein Bügel-Element 12 im Detail beschrieben. Das Bügel-Element 12 umfasst eine mit der Stirnfläche 13 verbundene Griff-Stirnfläche 14 und eine von dem Griff-Teil 3 entlang der Werkzeuglängsachse 2 beabstandete Rühr-Stirnfläche 15. Zwischen der Griff-Stirnfläche 14 und der Rühr-Stirnfläche 15 weisen die Bügel-Elemente 12 jeweils drei Abschnitte 16, 17, 18 unterschiedlicher Krümmung auf. Der erste Abschnitt 16 erstreckt sich ausgehend von der Griff-Stirnfläche 14 geradlinig weg, wobei ein Abstand zu der Werkzeuglängsachse 2 sich kontinuierlich vergrößert. Der zweite Abschnitt 17 schließt sich entlang der Werkzeuglängsachse 2 an den ersten Abschnitt 16 an und weist eine konkave Krümmung in Bezug zur Werkzeuglängsachse 2 auf. An den zweiten Abschnitt 17 schließt sich wiederum entlang der Werkzeuglängsachse 2 bis zu der Rühr-Stirnfläche 15 der dritte Abschnitt 18 an, wobei der dritte Abschnitt 18 eine konvexe Krümmung in Bezug zur Werkzeuglängsachse 2 aufweist. Wie insbesondere Fig. 5 zu entnehmen, ist die konvexe Krümmung des dritten Abschnitts 18 deutlich stärker ausgebildet als die konkave Krümmung des zweiten Abschnitts 17. Es ist grundsätzlich auch vorstellbar, auf einen Abschnitt mit konkaver Krümmung zu verzichten und stattdessen den ersten linearen Abschnitt 16 direkt in den dritten Abschnitt 18 mit konvexer Krümmung übergehen zu lassen. Die Gestaltung der Bügel-Elemente 12 mit Abschnitten unterschiedlicher Krümmung wirkt sich vorteilhaft auf die Durchmischung des umzurührenden Lebensmittels aus, da durch die mittels der konvexen Gestaltung erreichte Breite der Bügel-Elemente ein Strömungswiderstand des Schneebesens 1 beim Durchziehen durch das umzurührende Lebensmittel vergrößert ist.

Wie insbesondere Fig. 6 zu entnehmen, vergrößert sich eine Breite b des Bügel-Elements 12 quer zu einer Erstreckungsrichtung bzw. quer zur Werkzeuglängsachse 2 von der Griff-Stirnfläche 14 kontinuierlich in Richtung Rühr-Stirnfläche 15. So entspricht eine Breite b₁ benachbart zur Griff-Stirnfläche 14 in etwa der Hälfte der Breite b₂ benachbart zur Rühr-Stirnfläche 15.

Die Griff-Stirnfläche 14 und die Rühr-Stirnfläche 15 weisen jeweils eine im Wesentlichen rechteckförmige Kontur mit abgerundeten Ecken auf, wie den Fig. 6 und Fig. 7 zu entnehmen. Eine Querschnittsform der Bügel-Elemente 12 entlang deren Erstreckungsrichtung bzw. entlang der Werkzeuglängsachse 2 ist durchgehend ebenfalls im Wesentlichen rechteckförmig. Die Querschnittsform der Bügel-Elemente 12 ändert sich zwar entlang der Werkzeuglängsachse 2, bedingt durch die Breitenänderung, eine rechteckförmige Kontur wird jedoch beibehalten.

Wie aus Fig. 4 ersichtlich, erstreckt sich jedes der Bügel-Elemente 12 in einer separaten Bügel-Element-Ebene E. Die Bügel-Element-Ebenen E schneiden sich jeweils entlang der Werkzeuglängsachse 2. Aus der Draufsicht gemäß Fig. 4 ist zu erkennen, dass die Bügel-Elemente 12 sternförmig angeordnet sind und dass sich alle Bügel-Elemente 12 in einer von dem Griff-Teil 3 beabstandeten Verbindungsstelle 19 treffen, wobei die Verbindungsstelle 19 auf der Werkzeuglängsachse 2 liegt. Die Verbindungsstelle 19 ist dabei als eine Art Verbindungsscheibe ausgebildet, entlang deren Umfang die Bügel-Elemente 12 zusammenlaufen. Durch die Verbindungsscheibe 19 werden mehrere Rühr-Schlaufen gebildet, die jeweils aus zwei Bügel-Elementen 12 bestehen. Ausgehend von der Stirnfläche 13 erstreckt sich eine Rühr-Schlaufe dabei in Form eines ersten Bügel-Elements 12 zunächst entlang der Werkzeuglängsachse 2 weg von dem Griff-Teil 3 und läuft durch die Verbindungsscheibe 19 in Form eines zweiten Bügel-Elements 2 von der Verbindungsscheibe 19 entlang der Werkzeuglängsachse 2 zurück in Richtung Griff-Teil 3. Die Rühr-Schlaufen erstrecken sich in jedem Fall innerhalb von zwei Ebenen E, die durch die zwei Bügel-Elemente 12 aufgespannt werden, welche die jeweilige Rühr-Schlaufe bilden.

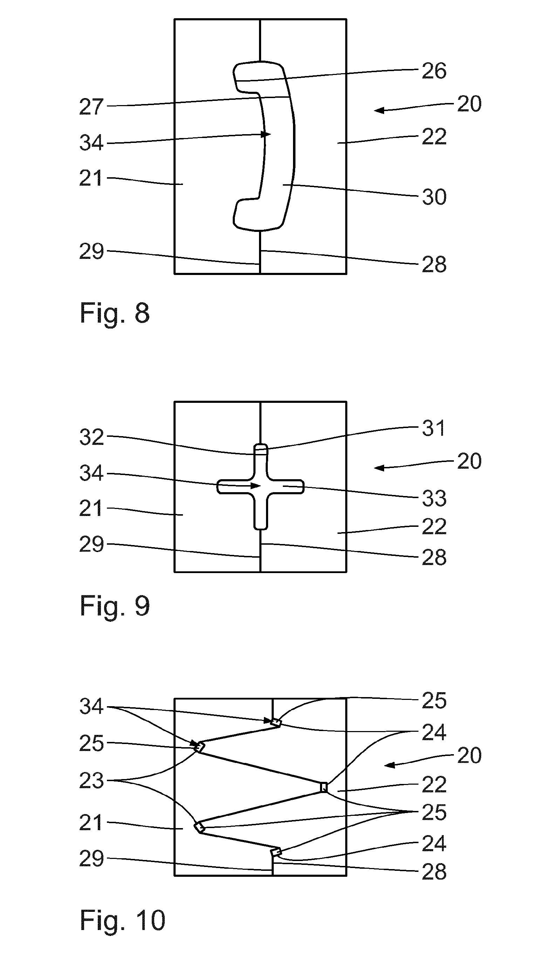

Bei dem Schneebesen 1 handelt es sich um ein Gussteil, insbesondere ein Spritzgussteil. Anhand der schematischen Darstellungen gemäß Fig. 8, Fig. 9 und Fig. 10 wird eine erste Ausfühningsvariante einer Gussform 20 beschrieben, die zur Herstellung eines Schneebesens 1 gemäß den Fig. 1 bis Fig. 7 geeignet ist.

Die Gussform 20 ist vorzugsweise als Spritzgussform verwendbar und umfasst ein erstes Form-Teil 21 und ein zweites Form-Teil 22. Die Form-Teile 21, 22 sind jeweils quaderförmig ausgebildet. In den Fig. 8, Fig. 9 und Fig. 10 sind jeweils schematische Querschnitte durch die Spritzgussform 20 quer zu einer Längserstreckung der Spritzgussform 20 gezeigt. Die Längserstreckung der Spritzgussform 20 verläuft entlang der Werkzeuglängsachse 2 des mit der Spritzgussform 20 herstellbaren Schneebesens 1. In den Fig. 8, Fig. 9 und Fig. 10 sind die Form-Teile 21, 22 in einem zusammengesetzten Zustand gezeigt. Im zusammengesetzten Zustand der Form-Teile 21, 22 weisen diese aufeinander zugewandten Stirnflächen 28, 29 auf. Fig. 8 zeigt die Spritzgussform 20 in einem Bereich, in dem das Griff-Teil 3 des Schneebesens 1 herstellbar ist. Fig. 9 zeigt die Spritzgussform 20 in einem Bereich, in dem der Übergangs-Abschnitt 9 des Griff-Teils 3 des Schneebesens 1 herstellbar ist. Fig. 10 zeigt die Spritzgussform 20 in einem Bereich, in dem das Rühr-Teil 4 mit den Bügel-Elementen 12 des Schneebesens 1 herstellbar ist.

Im in Fig. 10 gezeigten Bereich der Spritzgussform 20 weist das erste Form-Teil 21 erste Bügel-Element-Formgebungs-Mittel 23 auf und das zweite Form-Teil 22 zweite Bügel-Element-Formgebungs-Mittel 24. Die ersten Bügel-Element-Formgebungs-Mittel 23 sind jeweils als Vertiefungen in der ersten Stirnfläche 28 vorgesehen. Die zweiten Bügel-Element-Formgebungs-Mittel 24 sind als Erhebungen von der zweiten Stirnfläche 29 ausgebildet. Im zusammengesetzten Zustand der Form-Teile 21, 22 greifen die zweiten Bügel-Element-Formgebungs-Mittel 24 in die ersten Bügel-Element-Formgebungs-Mittel 23 ein.

Die ersten Bügel-Element-Formgebungs-Mittel 23 und die zweiten Bügel-Element-Formgebungs-Mittel 24 begrenzen im zusammengesetzten Zustand der Form-Teile 21, 22 Bügel-Teil-Hohlräume 25 zum Bilden der Bügel-Elemente 12. Eine Kontur der Bügel-Teil-Hohlräume 25 entspricht dabei einer Außenkontur der Bügel-Elemente 12 des mit der Spritzgussform 20 herstellbaren Schneebesens 1. Entsprechend dem sich entlang der Werkzeuglängsachse 2 verändernden Querschnitts der Bügel-Elemente 12 verändert sich auch ein Querschnitt der Innenkontur der Bügel-Teil-Hohlräume 25 entlang der Längserstreckung der Spritzgussform 20.

Im in Fig. 8 gezeigten Bereich der Spritzgussform 20 umfasst das erste Form-Teil 21 ein erstes Griff-Formgebungs-Mittel 26 und das zweite Form-Teil 22 ein zweites Griff-Formgebungs-Mittel 27. Die Griff-Formgebungs-Mittel 26, 27 sind jeweils als Vertiefungen in den Stirnflächen 28, 29 der Form-Teile 21, 22 vorgesehen. Das erste Griff-Formgebungs-Mittel 26 und das zweite Griff-Formgebungs-Mittel 27 begrenzen im zusammengesetzten Zustand der Form-Teile 21, 22 einen ersten Griff-Hohlraum 30 zum Bilden des Griff-Teils 3 des mittels der Spritzgussform 20 herstellbaren Schneebesens 1. Die Kontur des Griff-Hohlraums 30 entspricht einer Außenkontur des Grundkörpers 5 des Griff-Teils 3 zwischen erstem stirnseitigen Endbereich 6 und zweitem stirnseitigen Endbereich 7.

Der in Fig. 9 dargestellte Bereich der Spritzgussform 20 befindet sich entlang der Längserstreckung der Spritzgussform 20 zwischen dem in Fig. 8 gezeigten Bereich und dem in Fig. 10 gezeigten Bereich. In dem in Fig. 9 gezeigten Bereich weist das erste Form-Teil 21 ein weiteres erstes Griff-Formgebungs-Mittel 31 und das zweite Form-Teil 22 ein weiteres zweites Griff-Formgebungs-Mittel 32 auf. Die weiteren ersten und zweiten Griff-Formgebungs-Mittel 31, 32 sind wiederum als Vertiefungen in den Stirnflächen 28, 29 der Form-Teile 21, 22 ausgebildet. Die weiteren ersten und zweiten Griff Formgebungs-Mittel 31, 32 begrenzen im zusammengesetzten Zustand der Form-Teile 21, 22 einen zweiten Griff-Hohlraum 33 zum Bilden des Übergangs-Abschnitts 9 des Griff-Teils 3. In Fig. 9 ist der Bereich der Spritzgussform 20 gezeigt, mittels dem einer der Steg-Abschnitte 11 herstellbar ist. Die in Fig. 9 ersichtliche Kontur des zweiten Griff-Hohlraums 33 entspricht einer Außenkontur einer der Steg-Abschnitte 11 des Übergangs-Abschnitts 9.

Die Griff-Hohlräume 30, 33 schließen sich entlang der Längserstreckung der Spritzgussform 20 an die Bügel-Teil-Hohlräume 25 an, sodass durch die Griff-Hohlräume 30, 33 und die Bügel-Teil-Hohlräume 25 ein zusammenhängender Gesamt-Hohlraum 34 gebildet wird, welcher einer Kontur des mit der Spritzgussform 20 herstellbaren Schneebesens 1 entspricht. Nachfolgend wird beispielhaft ein Verfahren zur Herstellung eines erfindungsgemäßen Schneebesens nach den Fig. 1 bis Fig. 7 mittels der Spritzgussform 20 gemäß den Fig. 8 bis Fig. 10 beschrieben.

Zunächst ist eine Spritzgussform 20 gemäß den Fig. 8, Fig. 9 und Fig. 10 bereitzustellen. Anschließend ist die Spritzgussform 20 in den zusammengesetzten Zustand der Form-Teile 21, 22 zu überführen. Durch das Überführen der Form-Teil 21, 22 in den zusammengesetzten Zustand, in welchem die Stirnflächen 28, 29 plan aneinander anliegen, ist durch die Bügel-Element-Formgebungs-Mittel 23, 24 und die Griff-Formgebungs-Mittel 26, 27, 31, 32 der Gesamt-Hohlraum 34 gebildet, dessen Kontur einer Außenkontur des herzustellenden Schneebesens 1 entspricht. Anschließend ist ein geeignetes Kunststoffmaterial in den Gesamt-Hohlraum 34 der Spritzgussform 20 einzubringen. Das Einbringen des Kunststoffmaterials erfolgt in an sich bekannter Weise über vorzugsweise eine Kunststoffmaterial-Zuführöffnung. Nach einem Einbringen des Kunststoffmaterials und einem Verfestigen des erzeugten Schneebesens 1 auf an sich bekannte Weise ist der erzeugte Schneebesen 1 aus der Spritzgussform 20 zu entformen. Hierzu sind die Form-Teile 21, 22 voneinander wegzubewegen, sodass die Stirnflächen 28,29 nicht mehr in Kontakt miteinander stehen und der sich noch in dem Gesamt-Hohlraum 34 befindliche Schneebesen 1 herauslösbar ist.

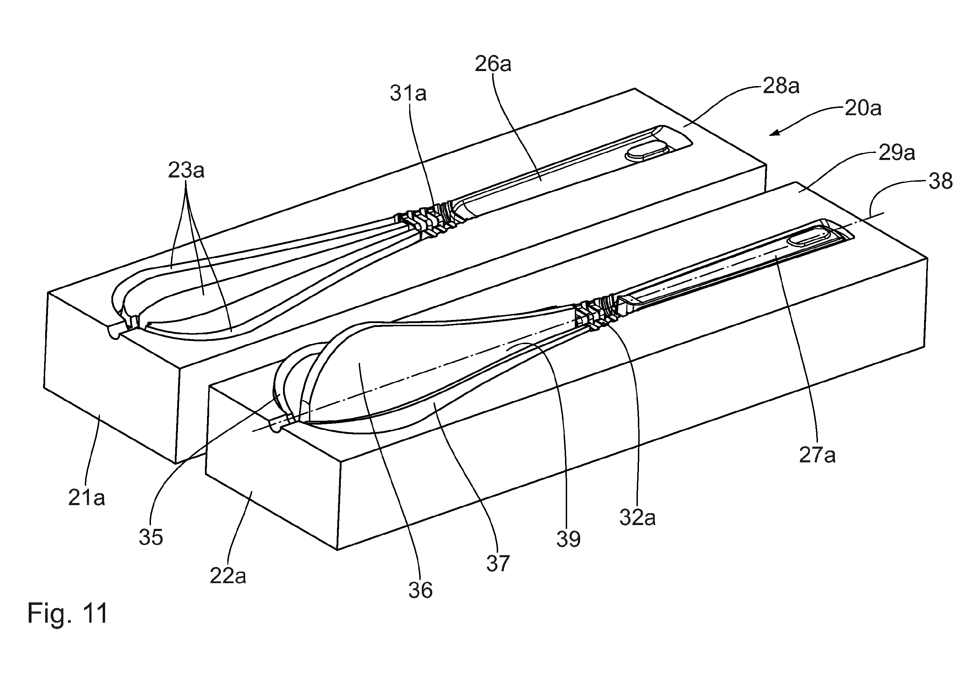

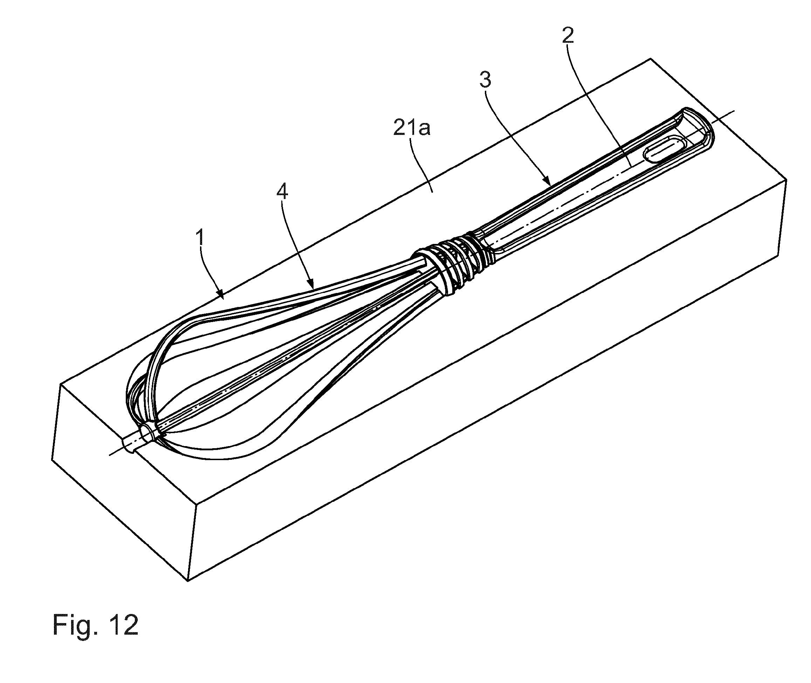

Nachfolgend wird anhand Fig. 11 und 12 eine zweite Ausfühningsvariante einer Gussform 20a beschrieben. Konstruktiv identische Teile erhalten dieselben Bezugszeichen mit einem nachgestellten a. Die Gussform 20a dient zur Herstellung eines Schneebesens 1 gemäß den Fig. 1 bis Fig. 7. Die Gussform 20a wird vorzugsweise als Spritzgussform verwendet. Die Spritzgussform 20a umfasst ein erstes Form-Teil 21a und ein zweites Form-Teil 22a. In Fig. 11 sind die Form-Teile 21 a, 22a in einem geöffneten Zustand gezeigt, bevor ein Kunststoffmaterial der Spritzgussform 20a zuführbar ist. In einem zusammengesetzten Zustand der Spritzgussform 20a liegen Stirnflächen 28a, 29a der Form-Teile 21a, 22a plan aufeinander. Die Form-Teile 21a, 22a sind jeweils quaderförmig ausgebildet und haben eine Längserstreckung, welche entlang der Werkzeuglängsachse 2 des mit der Spritzgussform 20a herstellbaren Schneebesens 1 verläuft. Entsprechend der ersten Ausfühningsvariante der Spritzgussform 20 sind in dem ersten Form-Teil 21a erste Bügel-Element-Formgebungs-Mittel 23a und erste Griff-Formgebungs-Mittel 26a, 31 a vorgesehen. Die Bügel-Element-Formgebungs-Mittel 23a und die Griff-Formgebungs-Mittel 26a, 31a sind jeweils aus Ausnehmungen in dem ersten Form-Teil 21 a ausgebildet.

Die zweiten Bügel-Element-Formgebungs-Mittel 35, 36, 37 sind im Unterschied zu den zweiten Bügel-Element-Formgebungs-Mittel 24 der Spritzgussform 20 als herauslösbar aus dem zweitem Form-Teil 22a ausgebildet. Die zweiten Bügel-Element-Formgebungs-Mittel 35, 36, 37 erstrecken sich als Erhebungen von einer Form-Teil-Achse 38 weg. Die Bügel-Element-Formgebungs-Mittel 35, 36, 37 sind entlang der Form-Teil-Achse 38 miteinander verbunden und einteilig ausgebildet. Die zweiten Bügel-Element-Formgebungs-Mittel 35, 36, 37 sind in eine Ausnehmung 39 einsetzbar. Die zweiten Griff-Formgebungs-Mittel 27a, 32a entsprechen im Wesentlichen den Griff-Formgebungs-Mitteln der ersten Ausfühningsvariante der Spritzgussform 20.

Die Bügel-Element-Formgebungs-Mittel 35, 36, 37 greifen in einem zusammengesetzten Zustand der Spritzgussform 20a in die ersten Bügel-Element-Formgebungs-Mittel 23a ein und bilden so Bügel-Teil-Hohlräume. Entsprechend werden durch Zusammenwirken der Griff-Formgebungs-Mittel 26a, 27a, 31 a, 32a erste und zweite Griff-Hohlräume gebildet.

Mit der zweiten Ausfühningsvariante der Spritzgussform 20a lassen sich mittels des oben anhand der ersten Ausfühningsvariante der Spritzgussform 20 beschriebenen Verfahrens erfindungsgemäße Schneebesen 1 herstellen. Fig. 12 zeigt das erste Form-Teil 21a, in welchem ein erfindungsgemäßer Schneebesen 1 nach einem Spritzgussvorgang und Abnehmen des zweiten Form-Teils 22a von dem ersten Form-Teil 21 a vorliegt.

## Patentansprüche

1. Rührwerkzeug, insbesondere Schneebesen, für Lebensmittel,
- mit einem Griff-Teil (3) zum Greifen des Rührwerkzeugs (1), und
- mit einem mit dem Griff-Teil (3) in Verbindung stehenden Rühr-Teil (4) mit mindestens zwei Bügel-Elementen (12) zum Einwirken auf das umzurührende Lebensmittel, welche sich jeweils von dem Griff-Teil (3) wegerstrecken,
- wobei zumindest das Rühr-Teil (4) aus einem Kunststoffmaterial gebildet ist.

2. Rührwerkzeug nach Anspruch 1, **dadurch gekennzeichnet, dass** das Griff-Teil (3) und das Rühr-Teil (4) einstückig aus dem Kunststoffmaterial gebildet sind.

3. Rührwerkzeug nach Anspruch 1 oder 2, **dadurch gekennzeichnet, dass** das Rühr-Teil (4) eine ungerade Zahl an Bügel-Elementen (12) umfasst.

4. Rührwerkzeug nach einem der vorherigen Ansprüche, **dadurch gekennzeichnet, dass** die Bügel-Elemente (12) um eine Werkzeuglängsachse (2) äquidistant beabstandet zueinander verlaufen.

5. Rührwerkzeug nach einem der vorherigen Ansprüche, **dadurch gekennzeichnet, dass** jedes Bügel-Element (12) sich in einer separaten Bügel-Element-Ebene (E) erstreckt, wobei sich die einzelnen Bügel-Element-Ebenen (12) entlang der Werkzeuglängsachse (2) schneiden.

6. Rührwerkzeug nach einem der vorherigen Ansprüche, **dadurch gekennzeichnet, dass** sich alle Bügel-Elemente (12) in einer von dem Griff-Teil (3) beabstandeten Verbindungsstelle (19) zum Bilden von mindestens einer Rühr-Schlaufe treffen, wobei die Verbindungsstelle (19) auf der Werkzeuglängsachse (2) liegt.

7. Rühwerkzeug nach einem der vorherigen Ansprüche, **dadurch gekennzeichnet, dass** die Bügel-Elemente (12) jeweils einen Abschnitt (18) mit konvexer Krümmung in Bezug zur Werkzeuglängsachse (2) aufweisen.

8. Rührwerkzeug nach einem der vorherigen Ansprüche, **dadurch gekennzeichnet, dass** die Bügel-Elemente (12) eine im Querschnitt betrachtet im Wesentlichen rechteckförmige Kontur aufweisen.

9. Rührwerkzeug nach einem der vorherigen Ansprüche, **dadurch gekennzeichnet, dass** sich eine Querschnittsform der Bügel-Elemente (12) entlang der Werkstücklängsachse (2) ändert.

10. Rührwerkzeug nach einem der vorherigen Ansprüche, **dadurch gekennzeichnet, dass** dieses ein Gussteil, insbesondere ein Spritzgussteil ist.

11. Gussform, insbesondere Spritzgussform, zur Herstellung eines Rührwerkzeuges nach einem der Ansprüche 1 bis 10,
a) mit einem ersten Form-Teil (21; 21 a) mit ersten Bügel-Element-Formgebungs-Mitteln (23; 23a) und
b) mit einem zweiten Form-Teil (22; 22a) mit zweiten Bügel-Element-Formgebungs-Mitteln (24; 24a),
c) wobei die ersten und zweiten Bügel-Element-Formgebungs-Mittel (23, 24; 23a, 24a) zusammen in einem zusammengesetzten Zustand der Form-Teile (21, 22; 21a, 22a) Bügel-Teil-Hohlräumen (25) zum Bilden der Bügel-Elemente (12) begrenzen.

12. Gussform nach Anspruch 11, **dadurch gekennzeichnet, dass** das erste Form-Teil (21; 21 a) erste Griff-Formgebungs-Mittel (26, 31; 26a, 31 a) und das zweite Form-Teil (22; 22a) zweite Griff-Formgebungs-Mittel (27, 32; 27a, 32a) umfasst, wobei die ersten und zweiten Griff-Formgebungs-Mittel (26, 27, 31, 32; 26a, 27a, 31a, 32a) im zusammengesetzten Zustand der Form-Teile (21, 22; 21a, 22a) mindestens einen Griff-Hohlraum (30, 33) zum Bilden des Griff-Teils begrenzen.

13. Gussform nach Anspruch 12, **dadurch gekennzeichnet, dass** der mindestens eine Griff-Hohlraum (30, 33) sich an die Bügel-Teil-Hohlräume (25) anschließt.

14. Verfahren zur Herstellung eines Rührwerkzeuges nach einem der Ansprüche 1 bis 10, umfassend die Schritte
- Bereitstellen einer Gussform (20; 20a) nach einem der Ansprüche 11 bis 13,
- Überführen der Form-Teile (21, 22; 21a, 22a) in den zusammengesetzten Zustand,
- Einbringen eines Kunststoffmaterials in die Gussform (20; 20a) zur Erzeugung des Rührwerkzeugs (1),
- Entformen des erzeugten Rührwerkzeugs (1) aus der Gussform (20; 20a).
